# EUROPÄISCHE PATENTSCHRIFT

(11) **EP 2 147 958 B1**
(45) Veröffentlichungstag und Bekanntmachung des Hinweises auf die Patenterteilung: **13.04.2016**
(21) Anmeldenummer: 09008952.5
(22) Anmeldetag: 09.07.2009
(51) Int. Cl.: C09J 5/00, B32B 37/12

(54) **Verfahren zur Herstellung eines Sandwich-Bauteils aus Kaltband**
Method for manufacturing a sandwich component part from cold rolled strip
Procédé de fabrication d'un composant sandwich à partir de feuillard laminé à froid

(30) Priorität: 23.07.2008 DE 102008034207
(43) Veröffentlichungstag der Anmeldung: 27.01.2010
(73) Patentinhaber: Bilstein GmbH & Co. KG, 58119 Hagen (DE)
(72) Erfinder: Krech, Dieter, 58119 Hagen (DE)
(74) Vertreter: Kesselhut, Wolf

(56) Entgegenhaltungen:
- WO-A1-03/047857
- US-A- 4 090 011

## Beschreibung

Die Erfindung betrifft ein Verfahren zur Herstellung eines Sandwich-Bauteils aus Kaltband gemäß dem Oberbegriff von Anspruch 1. Gattungsgemäße Verfaharen und Bauteile sind in den Dokumenten WO 03/047857 und US 4 090 011 offenbart.

Aufgrund der in den letzten Jahren ständig steigenden Energiekosten besteht ein großes Interesse daran, das Gesamtgewicht insbesondere von Kraftfahrzeugen insgesamt zu reduzieren. Die Karosserie stellt hierbei unter den Baugruppen eines Fahrzeuges mit ca. 25 % Gewichtsanteil den größten und somit wichtigsten Ansatzpunkt zur Gewichtsreduktion bei gleichzeitiger Beibehaltung der Steifigkeit und Betriebsfestigkeit sowie dem Crashverhalten und dem akustischen Komfort dar.

Auf der anderen Seite führen ständig neue gesetzliche Vorgaben zur Steigerung der Sicherheit sowie der Wunsch nach mehr Komfort dazu, dass sich das Fahrzeuggewicht bei vergleichbaren Modellen in den letzten 20 Jahren immer weiter erhöht hat.

Um die beiden gegenläufigen Tendenzen miteinander in Einklang zu bringen, werden in der Automobilfertigung Stähle mit hoch- und höchstfesten Güten sowie zusammengefügte Baugruppen - sogenannte "Tailored Blanks" - eingesetzt, um durch eine Verringerung der Materialdicken der verwendeten Bauteile das Gewicht der Fahrzeugkarosserien insgesamt zu verringern.

Hierbei spielt in den letzten Jahren die Klebtechnik, insbesondere das Strukturkleben, das mechanische Fügen und das Hybridfügen (Kombination aus beiden Fügeverfahren) eine immer größere Rolle, da sich hierdurch auch Sandwich-Bauteile, d.h. Bauteile aus unterschiedlichen Werkstoffen, zuverlässig und hochfest miteinander verbinden lassen, die z.B. nicht oder nur mit einem erheblichen Prozess- und Kostenaufwand miteinander verschweißt werden können. Die für die Verklebung erforderlichen Strukturklebstoffe sind bereits seit mehr als 10 Jahren auf dem Markt verfügbar.

In diesem Zusammenhang ist es aus der DE 198 26290 B4 bekannt, bei der Herstellung von Sandwich-Bauteilen mit zwei oder mehr Schichten, die beiden zu verbindenden Bleche vor der gemeinsamen Umformung mit einem Klebstoff zu beschichten, der während des Umformvorgangs dafür gesorgt, dass die Bleche aufeinander geleiten. Die zuvor erwähnten Bleche werden in der Fachsprache auch als "Bonded Blanks" bezeichnet.

Obgleich das zuvor beschriebene Verfahren bei der Herstellung von Sandwich-Bauteilen durch die Einsparung von Umformwerkzeugen und die Vorverlagerung des Fügeprozesses gegenüber einem separaten Umformprozess beider Bauteile zu einer Steigerung der Effizienz des Produktionsablaufs führt, ergibt sich hierbei das Problem, dass die Vorbereitungsarbeiten für den gemeinsamen mechanischen Umformungsprozess eine vergleichsweise große Anzahl von Arbeitsschritten erfordern, die allesamt mit einer hohen Genauigkeit durchgeführt werden müssen. So ist es zur Herstellung eines zuvor erwähnten Sandwich-Bauteils erforderlich, die beiden im Wesentlichen ebenen miteinander zu verbindenden Bleche zuerst zuzuschneiden. Danach müssen die einander zugewandten Seiten der Bleche mit Klebstoff beschichtet und im Anschluss daran in der korrekten relativen Lage zueinander in die Umformeinrichtung eingebracht werden, wozu jedes der Bauteile in der Regel mehrfach bewegt und positioniert werden muss. Während des sich anschließenden gemeinsamen mechanischen Umformungsprozesses muss dann ebenfalls dafür Sorge getragen werden, dass die Bauteile in ihrer relativen Position zueinander verbleiben, was z.B. durch Passstifte erfolgen kann, die jedoch wiederum zu einem Einreißen des Materials führen können und in diesem Falle den Umformungsprozess nachteilig beeinträchtigen.

Demgemäß ist es eine Aufgabe der vorliegenden Erfindung, ein Verfahren zu schaffen, mit welchem sich die zuvor erwähnten Sandwich-Bauteile in produktionstechnisch effizienterer Weise herstellen lassen.

Diese Aufgabe wird erfindungsgemäß durch die Merkmale von Anspruch 1 gelöst.

Weitere Merkmale der Erfindung sind in den Unteransprüchen enthalten.

Gemäß der Erfindung wird ein zuvor erwähntes Sandwich-Bauteil, wie beispielsweise eine Komponente einer Fahrzeugkarosserie, z.B. eine B-Säule, dadurch erhalten, dass auf ein Kaltband, welches durch mitunter mehrmaliges Kaltwalzen, Rekristallisationsglühen und Abkühlen von Stahlband gewonnen wird, nach dem Abkühlen des Kaltbandes eine Lage Klebstoff aufgebracht wird, der z.B. in flüssiger Form aus einer Sprüheinrichtung oder mit Hilfe einer Auftragsrolle auf das Kaltband aufgetragen werden kann.

Im Anschluss daran wird auf das Kaltband, welches beim Auftragen des Klebstoffs bevorzugt von einem Coil abgerollt wird, eine Funktionsschicht aufgebracht, die bevorzugt als ein Metallband aus dem gewünschten Werkstoff ausgebildet ist, welches vorzugsweise ebenfalls von einem Coil abgewickelt und zumindest abschnittsweise parallel zum Kaltband geführt wird, bevor beide Bänder mit der dazwischen angeordneten Klebstofflage gemeinsam wieder zu einem Coil aufgerollt werden.

Das Coil aus Kaltband, Klebstoff und Funktionsschicht wird dann zur Weiterverarbeitung z.B. mit einem LKW in eine geeignete Produktionsstätte verbracht, in der das Coil abgerollt und das Kaltband gemeinsam mit der aufgebrachten Klebstofflage und der Funktionsschicht durch einen bekannten mechanischen Umformprozess, z.B. durch Tiefziehen, in die gewünschte räumliche Form des Sandwich-Bauteils überführt wird.

Durch das erfindungsgemäße Verfahren ergibt sich der Vorteil, dass das Aufbringen des Klebstoffs und das Aufrollen des Kaltbandes mit der Klebstofflage und der Funktionsschicht zu einem Coil in effizienter Weise in einem Arbeitsablauf erfolgen können, ohne dass die Bänder hierzu in aufwändiger Weise mehrfach bewegt und neu positioniert werden müssen, wie dies z.B. bei der zuvor beschrieben Herstellung von "Bonded Blanks" beim Beschichten der ebenen Metallbleche mit Klebstoff der Fall ist.

Weiterhin ist es in dem nachfolgenden mechanischen Umformprozess ebenfalls nicht mehr erforderlich, dass Kaltband, bzw. die Funktionsschicht, welche z.B. die Funktion des Verstärkungsblechs im Falle der zuvor erwähnten B-Säule übernimmt, vor ihrer Zufuhr zu der mechanischen Umformeinrichtung in aufwändiger Weise jeweils einzeln zu positionieren, da eine gemeinsame Positionierung von Kaltband und Funktionsschicht beim Abrollen des Coils sozusagen automatisch erfolgt, beziehungsweise durch eine entsprechende laterale BandFührungseinrichtung, z.B. zwei seitliche Rollen, zentral vorgenommen werden kann. Hierdurch ergibt sich der Vorteil, dass bestehende Führungseinrichtungen für herkömmliche Kaltbänder weiterhin ohne größere technische Modifikationen genutzt werden können, so dass sich kein, bzw. nur ein minimaler zusätzlicher Vorrichtungsaufwand ergibt.

Ein weiterer Vorteil des erfindungsgemäßen Verfahrens besteht darin, dass die Zufuhr des Sandwich-Bandes aus Kaltband, Klebstofflage und Funktionsschicht zu der mechanischen Umformeinrichtung getaktet erfolgen kann, wobei die Umformeinrichtung bevorzugt eine bekannte Schneideinrichtung aufweist, die das Sandwich-Bauteil vor oder nach dem Umformvorgang automatisch von dem getaktet vorgeschobenen Sandwich-Band abtrennt, bevor dieses erneut weiter geschoben wird.

Ein weiterer Vorteil des erfindungsgemäßen Verfahrens ist darin zu sehen, dass beispielsweise hoch veredelte teure Werkstoffe als eine mitunter nur wenige Mikrometer dicke Funktionsschicht auf vergleichsweise kostengünstige unlegierte Werkstoffe aufgeklebt werden können, und der so erhaltende Sandwich aus Kaltband, Klebstofflage und Funktionsschicht ohne eine aufwändige Einzel-Handhabung von Bauteilen durch einen bekannten mechanischen Umformprozess in die gewünschte endgültige räumliche Form des Sandwichbauteils überführt werden kann.

So ist es beispielsweise denkbar, auf einen vergleichsweise dünnen und kostengünstigen Kaltband-Werkstoff mit einer Dicke von z.B. 1 bis 2 mm eine in höchstem Maße korrosionsbeständige und nur z.B. 10 bis 20 Mikrometer dicke Lage eines hoch veredelten teuren Stahls oder auch eine Lage aus Titan oder gar Gold aufzubringen, und das in dieser Weise erhaltene Sandwich-Band im Anschluss daran beispielsweise durch Tiefziehen in einen Behälter für korrosive Flüssigkeiten umzuformen, dessen Innenwand durch die Funktionsschicht gebildet wird. Weitere Anwendungsfälle sind z. B. gasdichte Tankinnenbeschichtungen durch korrosionsbeständige Stähle oder Rohrleitungssysteme für Zuleitungen oder auch Abgasleitungen korrosiver Medien.

Obgleich die Möglichkeit besteht, dass der Klebstoff beispielsweise durch das Verdunsten von Lösungsmitteln selbstständig aushärtet, ist der Klebstoff gemäß einer ersten Ausführungsform der Erfindung ein thermisch aktivierbarer Klebstoff, wie Epoxydharz, der bevorzugt in flüssiger Form auf das Kaltband aufgerollt oder aufgesprüht wird. Die Aushärtung des Klebstoffes erfolgt bei dieser Ausführungsform der Erfindung bevorzugt vor dem Aufrollen des Kaltbandes mit der darauf aufgebrachten Funktionsschicht zu einem Coil dadurch, dass der Klebstoff über die Aktivierungstemperatur des Klebstoffs hinaus erwärmt wird.

In gleicher Weise ist es jedoch ebenfalls denkbar, dass das Kaltband mit dem darauf aufgebrachten thermisch aktivierbaren Klebstoff und der Funktionsschicht ohne eine Aushärtung des Klebstoffes zu einem Coil aufgerollt wird, und das Coil als solches z.B. in einem Ofen, beispielsweise einem in der Kaltbandverarbeitung eingesetzten Haubenglühofen, über die Aktivierungstemperatur des Klebstoffes hinaus erwärmt wird, um diesen auszuhärten. Hierdurch ergibt sich der Vorteil, dass das thermische Aushärten des Klebstoffs in energetischer Hinsicht erheblich effizienter durchgeführt werden kann.

Anstelle eines rein thermisch aktivierbaren Klebstoffs wie Epoxydharz kann es jedoch ebenfalls vorgesehen sein, dass der Klebstoff zusätzlich in bekannter Weise Photoinitiatoren enthält, die bei der Einstrahlung von kurzwelligem Licht in Radikale zerfallen. Das kurzwellige Licht kann dabei durch geeignete UV-Lampen unmittelbar nach dem Aufbringen des Klebstoffs auf das Kaltband, bzw. die Funktionsschicht zugeführt werden und dient lediglich der Aktivierung des thermischen Aushärtungsprozesses. Die beim Zerfall der Photoinitiatoren in Radikale freiwerdende Zerfallsenergie erhöht dann die Temperatur in der vergleichsweise dünnen Klebstofflage über die Aktivierungstemperatur hinaus, so dass der Klebstoff, - z.B. ein Klebstoff auf Polyesterbasis - anschließend nach dem Aufrollen des Sandwich-Bandes aus Kaltband, Klebstoff und Funktionsschicht ohne weitere Wärmezufuhr im Coil aushärten kann.

Nach einem weiteren der Erfindung zugrund liegenden Gedanken ist der Klebstoff ein thermisch aktivierbarer Klebstoff, wobei die thermische Energie zum Aushärten des Klebstoffs erst durch die beim mechanischen Umformprozess freigesetzte thermische Energie eingebracht wird. Hierdurch ergibt sich der Vorteil, dass die Funktionsschicht während des Umformprozesses relativ zum Kaltband verschiebbar bleibt, wodurch sich bei einem gleichmäßigen flächigen Kontakt zwischen der Funktionsschicht und dem Kaltband im fertigen Sandwich-Bauteil hohe Umformgrade erhalten lassen, ohne dass die Klebeverbindung nachteilig lokal beeinträchtigt wird. Bei dieser Ausführungsform der Erfindung kann das fertige Sandwich-Bauteil gewünschten Falls bis zum vollständigen Aushärten des Klebstoffs in der Form verbleiben, wobei durch die in diesem Falle bevorzugt ebenfalls in die Form eingefahrene Matrize oder Positiv-Form sichergestellt wird, dass das Kaltband und die Funktionsschicht ganzflächig aneinander anliegen.

Ebenso kann der Klebstoff nach einer weiteren Ausführungsform der Erfindung ein kohlenstoffhaltiger, insbesondere organischer Klebstoff oder ein Klebstoff mit einem hohen Anteil an organischen Komponenten sein. In diesem Falle wird das Kaltband mit der darauf aufgebrachten Klebstofflage und Funktionsschicht vor dem Aufrollen zu einem Coil zuerst einem Abwalzprozess unterzogen, bei dem der Abwalzgrad bei beispielsweise 20 bis 60 % liegen kann. Im Anschluss an den Abwalzprozess erfolgt dann in erfindungsgemäßer Weise ein Glühprozess, welcher in Abhängigkeit von der Art und den gewünschten Werkstoffeigenschaften des verarbeiteten Kaltbands bzw. des fertigen Endbauteils bei einer Temperatur im Bereich zwischen 680 °C und 740 °C vorgenommen wird. Durch den Glühprozess in dem erwähnten Temperaturbereich bildet der im Klebstoff enthaltene Kohlenstoff zwischen dem Kaltband und der Funktionsschicht eine Diffusionsschicht aus Kohlenstoff, die sowohl in die Oberfläche des Kaltbandes, als auch in die Oberfläche der Funktionsschicht eindringt und die beiden Werkstoffe auf dieses Weise miteinander verbindet. Diese Ausführungsform der Erfindung wird bevorzugt bei Funktionsschichten aus Metall, insbesondere aus Edelstahl oder hoch legiertem Stahl eingesetzt, die sich dadurch in mechanisch nahezu unlösbarer Weise mit dem Kaltband verbinden. Der Klebstoff dient in diesem Falle anfänglich lediglich zur Fixierung der Position der Funktionsschicht relativ zum Kaltband.

Obgleich der Glühprozess in Abhängigkeit von dem verarbeiteten Kaltband und dem Material der Funktionsschicht unmittelbar nach dem Verkleben von Kaltband und Funktionsschicht und vor dem Aufwickeln des so erhaltenden Band-Sandwiches in einem Durchlaufofen erfolgen kann, wird der Band-Sandwich bei der bevorzugten Ausführungsform der Erfindung zuerst zu einem Coil aufgerollt und das Coil als solches anschließend in einem Haubenglühofen auf die gewünschte Temperatur für den Diffusionsglühprozess erhitzt und in kontrollierter Weise z.B. für 48 Stunden auf dieser gehalten. Hierdurch ergibt sich der Vorteil, dass nicht nur die Durchlaufgeschwindigkeiten für das Kaltband und die Funktionsschicht auf z.B. 10 bis 20m/s erhöht werden können, sondern dass auch der Glühprozess als solcher erheblich präziser kontrolliert werden kann, wodurch sich die Qualität des erhaltenen Sandwich-Bauteils in vorteilhafter Weise erhöht.

Die in der zuvor beschriebenen Weise gefertigten Coils, in denen das Kaltband und die Funktionsschicht nach dem Glühprozess in hochfester Weise durch eine Diffusionsschicht miteinander verbunden sind, werden im Anschluss daran dem mechanischen Umformprozess zugeführt, wobei es sich gezeigt hat, das die mechanischen Umformeigenschaften des bandförmigen Sandwich-Materials im Wesentlichen denjenigen des Kaltband-Werkstoffs entsprechen, bzw. diese zum Teil sogar noch übertreffen.

Bei den zuvor beschriebenen Ausführungsformen des erfindungsgemäßen Verfahren kann die mechanische Umformung des vom Coil abgewickelten Sandwich-Bandes in vorteilhafter Weise durch alle derzeit bekannten mechanischen Umformprozesse erfolgen, wobei sich insbesondere eine Umformung durch Druck, Tiefziehen oder auch durch Streckziehen als besonders vorteilhaft herausgestellt haben, um das flächige Kaltband zusammen mit der Funktionsschicht in die räumliche Form des Sandwich-Bauteils zu überführen.

Weiterhin kann es vorgesehen sein, dass die Funktionsschicht lediglich in Teilabschnitten auf das Kaltband aufgebracht wird, wozu die aufzubringenden Abschnitte der Funktionsschicht z.B. mittels eines durch Hitzeeinwirkung lösbaren Klebstoffs, z.B. Heißkleber, oder durch Magnetkraft auf einem endlosen umlaufenden Metallband angeordnet werden können. Das endlose Metallband kann z.B. über eine Umlenkrolle mit dem zuvor mit thermisch aktivierbarem Klebstoffbeschichteten Kaltband zusammengeführt und im Anschluss daran gemeinsam mit dem Kaltband einem Durchlaufofen, z.B. einen Induktionsofen durchlaufen, in welchem die Klebstofflage zwischen Kaltband und Funktionsschicht durch die eingebrachte Wärmeenergie aushärtet und im Gegenzuge die Schmelzklebstoffverbindung oder magnetische Verbindung wieder gelöst wird. Nach dem Verlassen des Durchlaufofens wird der Bandsandwich aus Kaltband und der abschnittsweise mit diesem verklebten Funktionsschicht in der zuvor erwähnten Weise zum Coil aufgerollt, welches anschließend der mechanischen Umformeinrichtung zugeführt wird.

Durch diese Ausführungsform der Erfindung ergibt sich der Vorteil, dass die Sandwich-Bauteile in produktionstechnisch effizienter Weise nur lokal begrenzt in ausgewählten Bereichen mit der Funktionsschicht versehen werden können, was zu einer Einsparung von Material führt. So ist es beispielsweise denkbar, die B-Säulen von Personenkraftwagen nur im Bereich der Mitte der Säulen zum Schutz der Insassen bei einem Seitenaufprall mit einer Funktionsschicht aus einem hochfesten Stahlwerkstoff zu verstärken, wohingegen die beiden Endbereiche der Säulen zur Aufnahme von bei einem Seitenaufprall freiwerdender kinetischer Energie deformierbar sein sollen. Es versteht sich in diesem Zusammenhang, dass die Verbindung der Funktionsschicht-Abschnitte mit dem Kaltband bei dem zuvor geschilderten Beispiel auch über eine zuvor erwähnte Diffusionsschicht hergestellt werden kann, um die Festigkeit des Bauteils im Bereich der Mitte in besonderem Maße zu erhöhen.

Nach einem weiteren der Erfindung zugrund liegenden Gedanken kann das Kaltband auf beiden Seiten jeweils mit einer Lage Klebstoff sowie einer darauf aufgebrachten Funktionsschicht versehen sein, wobei Aufbringen und Verkleben der beiden Funktionsschichten in vorteilhafter Weise bevorzugt gleichzeitig erfolgen. Hierdurch ergibt sich der Vorteil, dass insbesondere unterschiedliche Werkstoffe als Funktionsschicht auf das Kaltband aufgebracht werden können, z.B. eine korrosionsbeständige erste Funktionsschicht, welche lediglich eine Dicke von wenigen Zehntel oder gar hundertstel Millimetern aufweisen kann, sowie eine auf die andere Seite des Kaltbandes mitunter auch nur abschnittsweise aufgebrachte Verstärkungslage aus einem hochlegierten hochfesten Stahl, welcher zur Verstärkung oder auch zur lokalen Erhöhung der Abriebsfestigkeit des Bauteils auf dieser Seite dient.

So kann die Funktionsschicht z.B. einen korrosionsbeständigen Werkstoff, insbesondere Edelstahl, Aluminium oder Titan umfassen, der nach dem Aufbringen der Klebstofflage als dünne Folie ganzflächig mit dem Kaltband überlagert wird, und der nach dem Umformvorgang z.B. die korrosionsbeständige Innenwand eines Tanks oder die hochverschleißfeste Außenfläche einer Sitzschiene in einem Kraftfahrzeug bildet.

Die Erfindung betrifft weiterhin ein Coil umfassend ein durch Walzen und Rekristallisationsglühen sowie Abkühlen erhaltenes Kaltband sowie eine in einer der zuvor beschriebenen Weisen auf das Kaltband aufgebrachte und mit diesem durch eine Klebstofflage bzw. Diffusionsschicht verbundene Funktionsschicht.

Die Erfindung wird nachfolgend mit Bezug auf die Zeichnungen anhand von drei bevorzugten Ausführungsformen beschrieben.

In den Zeichnungen zeigen:
- Fig. 1a: eine erste Ausführungsform des erfindungsgemäßen Verfahrens, bei der das Kaltband mit der Klebstofflage und der aufgebrachten Funktionsschicht nach ihrer Zusammenführung direkt zu einem Coil aufgewickelt werden,
- Fig. 1b: das Abrollen und Umformen des Coils von Fig. 1a, wobei die Aushärtung des Klebstoffs durch den mechanischen Umformprozess selbst, bzw. in einer Form erfolgt,
- Fig. 2a: eine weitere Ausführungsform des erfindungsgemäßen Verfahrens, bei der die Klebstofflage einen thermisch aktivierbaren Klebstoff umfasst und die Aushärtung des Klebstoffs vor dem Aufrollen des Sandwich-Bandes in einem Durchlaufofen erfolgt,
- Fig. 2b: das Abrollen und Umformen des Coils von Fig. 2a,
- Fig. 3a: eine weitere Ausführungsform des erfindungsgemäßen Verfahrens, bei der die Klebstofflage einen kohlenstoffhaltigen Klebstoffumfasst und die Verbindung zwischen der Funktionsschicht und dem Kaltband durch einen weiteren optionalen Abwalzvorgang sowie eine Glühbehandlung des aufgrollten Coils in einem Haubenglühofen erfolgt, und
- Fig. 3b: das Abrollen und mechanische Umformen des Coils von Fig. 3a,

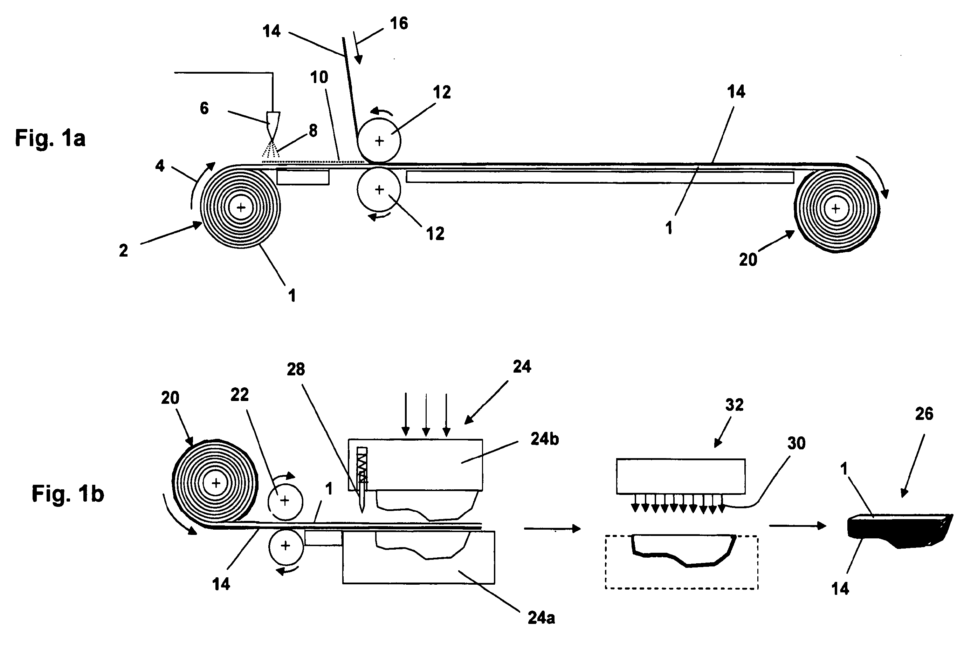

Wie in Fig. 1a und 1b gezeigt ist, wird bei dem erfindungsgemäßen Verfahren gemäß einer ersten Ausführungsform der Erfindung ein Kaltband 1, welches beispielsweise eine Breite von 80 mm besitzt, von einem Coil 2 in Richtung des Pfeils 4 abgewickelt. Bei dem Kaltband 1 handelt es sich um ein Stahlband, welches zuvor in bekannter Weise durch mehrfaches Kaltwalzen und Rekristallisationsglühen eines als "Warmband" bezeichneten Stahlbandes erhalten wird, und welches durch den Walzvorgang eine erheblich höhere Festigkeit als das Warmband aufweist.

Wie der Darstellung von Fig. 1a und 1b weiterhin entnommen werden kann, wird das Kaltband 1 bevorzugt unmittelbar nach dem Abrollen vom Coil 2 mittels einer Sprüheinrichtung 6 mit Klebstoff 8 beschichtet, welcher alternativ jedoch ebenfalls über eine nicht dargestellte Auftragsrolle oder in sonstiger Weise aufgebracht werden kann. Der Klebstoff 8 bildet auf der Außenfläche des Kaltbandes 1 eine Klebstofflage 10, die beispielsweise eine Dicke im Bereich von wenigen Mikrometern, z. B. 10 Mikrometern bis zu einigen zehntel Millimetern besitzen kann.

Nach dem Aufbringen des Klebstoffs 8 wird das Kaltband 1 mit der darauf angeordneten Klebstofflage 10 bevorzugt einem Paar von aneinander angestellten Walzen 12 zugeführt, von denen die in Fig. 1a obere Walze 12 als Umlenkwalze für eine ebenfalls zugeführte bandförmige Funktionsschicht 14 dient, die beispielsweise von einem nicht näher gezeigten Coil abgezogen und in Richtung des Pfeils 16 mit im Wesentlichen derselben Geschwindigkeit wie die Fördergeschwindigkeit des Kaltbandes 1 transportiert wird.

Die Funktionsschicht 14, die bevorzugt die gleiche Breite wie das Kaltband 1 besitzt, und beispielsweise aus einem hoch veredelten dünnen Stahlband mit einer hohen Korrosionsbeständigkeit, oder aus einem anderen Metall wie Aluminium oder auch Titan etc. bestehen kann, wird innerhalb des von den beiden Walzen 12 gebildeten Spaltes ganzflächig an das Kaltband 1 angepresst.

Nachdem die Funktionsschicht 14 und das damit verbundene Kaltband 1 den Walzenspalt verlassen haben, werden diese in bekannter Weise wiederum zu einem Coil 20 aufgewickelt.

Das Coil 20 wird im Anschluss daran beispielsweise mit einem LKW zu einem Verarbeitungsbetrieb transportiert, in welchem das mit der Funktionsschicht 14 verklebte Kaltband 1 gemäß der Darstellung von Fig. 1b durch ein Zugwalzenpaar 22 abgerollt und einer mechanischen Umformeinrichtung 24 zugeführt wird.

Die mechanische Umformeinrichtung 24, die eine in den Figuren lediglich schematisch angedeutete, der Kontur des fertigen Sandwichbauteils 26 entsprechende Negativ-Form 24a sowie eine in die Negativ-Form 26a mit hohem Druck einpressbare Matrize oder Positiv-Form 24b aufweist, formt das Kaltband 1 mit der darauf aufgebrachten Funktionsschicht 14 unter Einwirkung einer durch die Pfeile in Fig. 1b angedeuteten hohen mechanischen Kraft in ein entsprechendes Formteil um.

Das Abrollen des Coils 20 erfolgt dabei bevorzugt getaktet oder schubweise und wird durch eine nicht näher gezeigte Steuerungseinrichtung sowie entsprechende Sensoren gesteuert und überwacht. Der mechanischen Umformeinrichtung 24 ist ferner vorzugsweise ein in den Figuren lediglich schematisch angedeutetes Schneidmesser 28 zugeordnet, welches den im Bereich der Form 24a befindlichen Abschnitt des Kaltbandes 1 zusammen mit der aufgebrachten Funktionsschicht 14 bevorzugt vor der Durchführung des Umformvorgangs abtrennt.

Nach dem Abschluss des Umformprozesses und der Entnahme des geformten Sandwich-Bauteils 26 aus der Form 24a wird das Coil 20 dann wiederum rotiert um einen neuen Abschnitt des Kaltbandes 1 mit der aufgeklebten Funktionsschicht 14 in den Bereich der Form 24a der Umformeinrichtung 24 vorzuschieben.

Obgleich die beim Umformprozess eingebrachte Umformenergie mitunter ausreicht, um den Klebstoff 8, der bevorzugt ein thermisch aktivierbarer Klebstoff ist, auszuhärten, kann es in einem nachfolgenden Verfahrensschritt weiterhin vorgesehen sein, das erfindungsgemäße Sandwich-Bauteil 26 nach dem Umformprozess durch Einbringen von zusätzlicher Wärmeenergie 30 auszuhärten, was z.B. durch den schematisch angedeuteten Ofen 32 in einer optionalen Form erfolgen kann, welch letztere durch die gestrichelten Linien angedeutet ist. Nach Abschluss des Aushärtungsprozesses wird ein fertiges Sandwich-Bauteil 26 erhalten, dessen räumlich geformter Grundkörper aus Kaltband 1 mit den gewünschten spezifischen Materialeigenschaften besteht und dessen Außenfläche in dem in Fig. 1 gezeigten Beispiel vollständig durch die Funktionsschicht 14 gebildet wird.

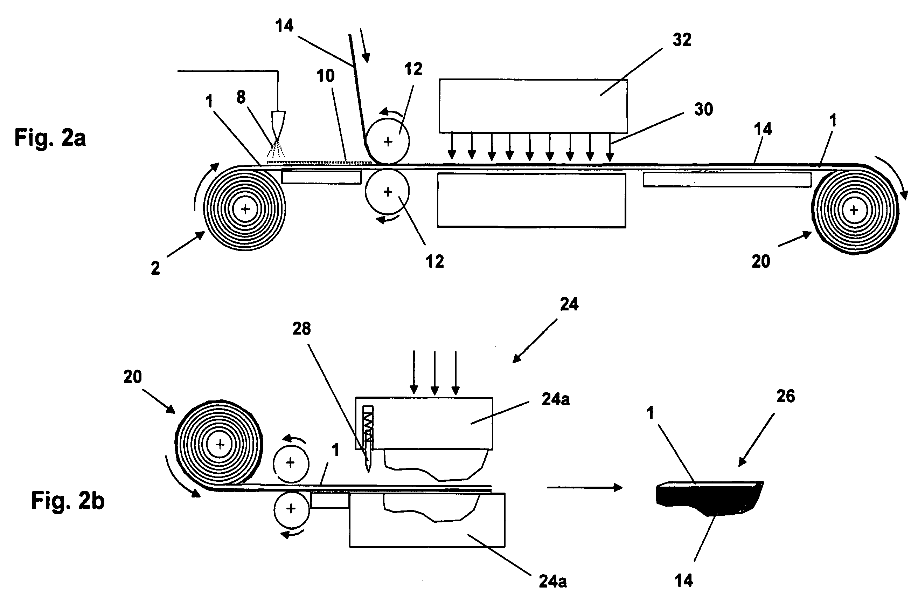

Gemäß der in den Fig. 2a und 2b gezeigten Ausführungsform des erfindungsgemäßen Verfahrens wird der thermisch aktivierbare Klebstoff 8 nach dem Aufbringen der Klebstofflage 10 auf das Kaltband 1 und dem Überlagern mit der Funktionsschicht 14 mittels der Walzen 12 bereits vor dem Aufwickeln des Sandwich-Bandes durch Einbringen von Wärmeenergie mit Hilfe eines den Walzen 12 nachgeschalteten Durchlaufofens 32 ausgehärtet, bzw. zumindest über die Aktivierungstemperatur des Klebstoffs hinaus erhitzt, so dass die Aushärtung nach dem Aufrollen des Coils 20 im gelagerten Coil als solchem erfolgen kann. Im Anschluss daran wird das Coil 20 gemäß der Darstellung von Fig. 2b mit der ausgehärteten Klebstofflage der mechanischen Umformeinrichtung 24 zugeführt und das Sandwich-Band in die gewünschte räumliche Form des endgültigen Sandwich-Bauteils 26 überführt, welches bei dem dargestellten Beispiel auf seiner Außenseite die Funktionsschicht 14 aufweist und auf seiner Innenseite aus dem Kaltband 1 besteht. Es ist jedoch ebenso denkbar, durch Wenden des Coils 20 in der Darstellung Fig. 2b die Funktionsschicht 14 auf der Innenseite des räumlichen Sandwich-Bauteils 26 anzuordnen, beispielsweise als korrosionsbeständige hochvergütete Edelstahllage in einem Tank oder dergleichen, wobei sich das Kaltband 1 in diesem Falle auf der Außenseite des Sandwich-Bauteils 26 befindet.

Weiterhin kann anstelle des in Fig. 2a dargestellten Durchlaufofens 32 ebenso ein Ofen zum Einsatz gelangen, in welchen das fertig aufgerollte Coil 20 bis zum Aushärten des Klebstoffs 8 eingebracht wird.

Weiterhin ist es denkbar, einen durch UV-Licht härtbaren Klebstoff 8 zu verwenden, der ebenfalls als Klebstofflage 10 auf das Kaltband 1 aufgebracht wird, und der kurz vor dem Zuführen der Funktionsschicht 14 mit geeignetem kurzwelligem UV-Licht bestrahlt wird, welches die Fotoinitiatoren im Klebstoff zu einem Aushärten des Klebstoffs 8 veranlasst, so dass der Klebstoff selbständig aushärtet, nachdem die Funktionsschicht 14 über die Walzen 12 auf das Kaltband 1 aufgebracht wurde. Hierbei kann der Klebstoff 8 erforderlichenfalls auch eine Mischung aus einem thermisch aktivierbaren Klebstoff und geeigneten Fotoinitiatoren enthalten, so dass der Aushärtungsprozess durch das UV-Licht lediglich initiiert wird und die dabei freigesetzte Wärmeenergie im Anschluss daran die thermisch härtbaren Komponenten des Klebstoff aushärtet. Hierfür geeignete Klebstoffe sind beispielsweise aus der EP 0023634 A1 sowie den darin angeführten Dokumenten bekannt.

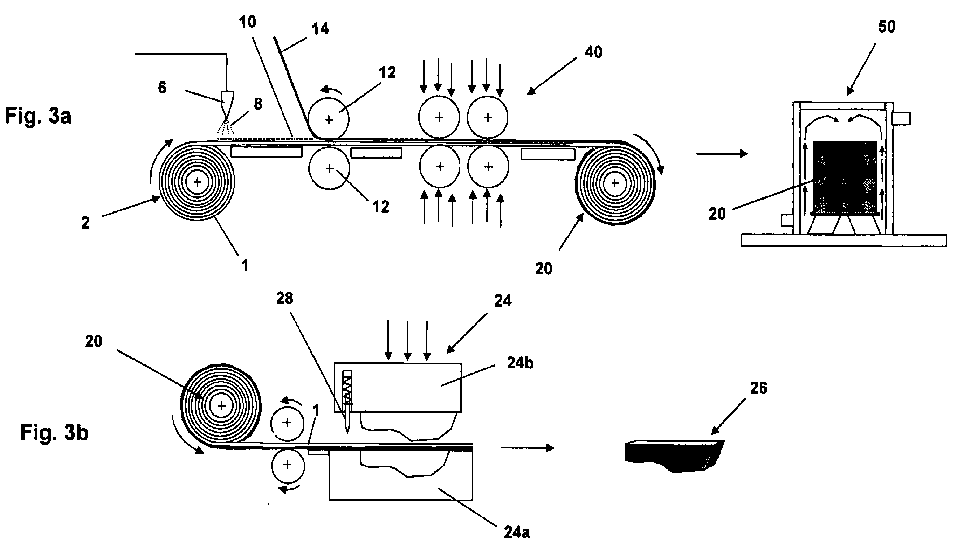

Nach der in Fig. 3a und 3b gezeigten weiteren Ausführungsform des erfindungsgemäßen Verfahrens wird das vom Coil 2 abgewickelte Kaltband 1 über die Sprüheinrichtung 6 mit einem kohlestoffhaltigen Klebstoff beaufschlagt und im Anschluss daran die Funktionsschicht 14 als bandförmiges Material über die aneinander angestellten Walzen 12 auf die entstandene Klebstofflage 10 aufgebracht.

In einer den Walzen 12 nach geordneten Kaltwalzeinrichtung 40, die in Fig. 3a durch insgesamt 4 schematisch dargestellte und mit hohem Druck aneinander angestellte Walzen symbolisiert ist, wird das Kaltband 1 mit der darauf aufgebrachten Funktionsschicht 14 anschließend optional einem erneuten Kaltwalzvorgang unterzogen, und das Kaltband 1 hierbei beispielsweise auf lediglich 80 % oder weniger seiner ursprünglichen Dicke abgewalzt, um die Festigkeit des Kaltband-Materials in einer für Kaltwalzvorgänge charakteristischen Weise zu erhöhen.

Im Anschluss daran wird das über die Klebstofflage 10 mit der Funktionsschicht 14 verbundene, abgewalzte Kaltband auf ein Coil 20 aufgerollt, dass im Anschluss daran in einen bekannten Haubenglühofen 50 eingebracht wird, und in diesem z. B. für 48 Stunden bei einer Temperatur im Bereich zwischen 680 ° und 750 ° gemäß einem vorgegebenen Temperaturprofil geglüht wird. Durch diesen nachfolgenden Glühprozess wandelt sich die Lage 10 des kohlenstoffhaltigen Klebstoff 8 in einem Diffusionsschicht um, welche in die Oberfläche des Kaltbandes 1 sowie die dieser zugewandte Oberfläche der Funktionsschicht 14 eindringt und hierdurch zu einer mechanisch hochfesten Verbindung von Funktionsschicht 14 und Kaltband 1 führt.

Das in dieser Weise über die in den Zeichnungen aus darstellungstechnischen Gründen nicht näher gezeigte Diffusionsschicht mit der Funktionsschicht 14 verbundene Kaltband 1 wird im Anschluss daran gemäß der Darstellung von Fig. 3b von dem zugeordneten Coil 20, der zuvor in einen entsprechenden Weiterverarbeitungsbetrieb transportiert wurde, abgerollt und in der zuvor beschriebenen Weise der mechanischen Umformeinrichtung 24 zugeführt, um das erfindungsgemäße Sandwich-Bauteil 26 zu erhalten.

## Patentansprüche

1. Verfahren zur Herstellung eines Sandwich-Bauteils (26) aus Kaltband (1), welches durch Kaltwalzen, Rekristallisationsglühen und Abkühlen von Stahlband erhalten wird, wobei auf das Kaltband (1) eine weitere Funktionsschicht (14) aufgebracht ist,
**gekennzeichnet durch** die folgenden Verfahrensschritte:
Abkühlen des Kaltbandes (1) nach dem Walzen und Rekristallisationsglühen, Aufbringen einer Klebstofflage (10) auf das abgekühlte Kaltband (1), Aufbringen der Funktionsschicht (14) auf die Klebstofflage (10), Aufrollen des Kaltbandes (1) mit der aufgebrachten Klebstofflage (10) und Funktionsschicht (14) zu einem Coil (20) sowie Abrollen des Coils (20) und mechanisches Umformen des Kaltbandes (1) mit der aufgebrachten Klebstofflage (10) und Funktionsschicht (14) zu einem Sandwich-Bauteil (26).

2. Verfahren nach Anspruch 1,
**dadurch gekennzeichnet,**
**dass** der Klebstoff (8) der Klebstofflage (10) ein thermisch aktivierbarer Klebstoff ist oder einen solchen enthält, und dass das Kaltband (1) mit der darauf aufgebrachten Funktionsschicht (14) vor dem Aufrollen zu einem Coil (20) zur Aushärtung des Klebstoffs (8) über die Aktivierungstemperatur des Klebstoffs (8) hinaus erwärmt wird.

3. Verfahren nach Anspruch 1,
**dadurch gekennzeichnet,**
der Klebstoff (8) der Klebstofflage (10) ein thermisch aktivierbarer Klebstoff ist oder einen solchen enthält, und dass die Aushärtung des Klebstoffs (8) durch die beim Umformprozess freigesetzte thermische Energie aktiviert wird, derart, dass die Funktionsschicht (14) während des Umformprozesses relativ zum Kaltband (1) verschiebbar ist.

4. Verfahren nach einem der Ansprüche 1 oder 2,
**dadurch gekennzeichnet,**
**dass** der Klebstoff (8) der Klebstofflage (10) ein kohlenstoffhaltiger, insbesondere organischer Klebstoff ist, und dass das Kaltband (1) mit der darauf aufgebrachten Funktionsschicht (14) vor dem Aufrollen zu einem Coil (20) zuerst einem Abwalzprozess sowie im Anschluss daran einem Rekristallisationsglühprozess unterzogen wird, derart, dass der im Klebstoff (8) enthaltene Kohlenstoff zwischen dem Kaltband (1) und der Funktionsschicht (14) eine Diffusionsschicht bildet, welche das Kaltband (1) und die Funktionsschicht (14) miteinander verbindet.

5. Verfahren nach einem der vorhergehenden Ansprüche,
**dadurch gekennzeichnet,**
**dass** das Kaltband (1) mit der aufgeklebten Funktionsschicht (14) vom Coil (20) abgerollt und insbesondere einem Druckumformungsprozess, einem Tiefziehprozess oder einem Streckziehprozess unterzogen wird, um das flächige Kaltband (1) zusammen mit der Funktionsschicht (14) in die räumliche Form des Sandwich-Bauteils (26) zu überführen.

6. Verfahren nach einem der vorhergehenden Ansprüche,
**dadurch gekennzeichnet,**
**dass** die Funktionsschicht (14) lediglich in Teilabschnitten auf die erste Seite des Kaltbandes (1) aufgebracht wird.

7. Verfahren nach einem der vorhergehenden Ansprüche,
**dadurch gekennzeichnet,**
**dass** das Kaltband (1) auf beiden Seiten mit einer Lage Klebstoff versehen ist, und dass auf beide Seiten des Kaltbandes (1) eine Funktionsschicht (14) aufgebracht wird.

8. Verfahren nach einem der vorhergehenden Ansprüche,
**dadurch gekennzeichnet,**
**dass** die Funktionsschicht (14) einen korrosionsbeständigen Werkstoff, insbesondere Edelstahl, Aluminium oder Titan enthält, der nach dem Aufbringen der Klebstofflage (10) flächig mit dem Kaltband (1) überlagert wird.

9. Kaltband-Coil (20) umfassend ein durch Walzen und Rekristallisationsglühen sowie Abkühlen erhaltenes Kaltband (1) sowie eine auf das Kaltband (1) aufgebrachte und mit diesem durch eine Klebstofflage verbundene Funktionsschicht (14).

## Claims

1. Method for producing a sandwich component (26) from cold rolled strip (1) which is obtained by the cold rolling, recrystallisation annealing and cooling of steel strip, wherein a further functional layer (14) is applied on to the cold rolled strip (1),
**characterised by** the following steps:
cooling the cold rolled strip (1) after the rolling and recrystallisation annealing, applying an adhesive layer (10) to the cooled cold rolled strip (1), applying the functional layer (14) to the adhesive layer (10), rolling the cold rolled strip (1) with the applied adhesive layer (10) and functional layer (14) into a coil (20) and unrolling the coil (20) and mechanically forming the cold rolled strip (1) with the applied adhesive layer (10) and functional layer (14) into a sandwich component (26).

2. Method in accordance with claim 1,
**characterised in that**
the adhesive (8) of the adhesive layer (10) is a thermally activated adhesive or contains such, and that the cold rolled strip (1) with the functional layer (14) applied on to it is heated before rolling into a coil (20) to cure the adhesive (8) above the activation temperature of the adhesive (8).

3. Method in accordance with claim 1,
**characterised in that**
the adhesive (8) of the adhesive layer (10) is a thermally activated adhesive or contains such, and that the curing of the adhesive (8) is activated by the thermal energy released during the forming process such that the functional layer (14) can be displaced relative to the cold rolled strip (1) during the forming process.

4. Method in accordance with any one of the claims 1 or 2,
**characterised in that**
the adhesive (8) of the adhesive layer (10) is a carbon-containing, in particular organic adhesive, and the cold rolled strip (1) with the functional layer (14) applied on to it, before being rolled into a coil (20), first undergoes an unrolling process, followed by a recrystallisation annealing process such that the carbon contained in the adhesive (8) forms a diffusion layer between the cold rolled strip (1) and the functional layer (14), wherein said diffusion layer attaches the cold rolled strip (1) and the functional layer (14) together.

5. Method in accordance with any one of the previous claims,
**characterised in that**
the cold rolled strip (1) with the functional layer (14) is rolled out from the coil (20) and undergoes, in particular, a pressure forming process, a deep drawing process or a stretch forming process in order to transform the flat cold rolled strip (1) together with the functional layer (14) into the spatial form of the sandwich component (26).

6. Method in accordance with any one of the previous claims,
**characterised in that**
the functional layer (14) is applied in partial sections only to the first side of the cold rolled strip (1).

7. Method in accordance with any one of the previous claims,
**characterised in that**
the cold rolled strip (1) is provided with a layer of adhesive on both sides and that a functional layer (14) is applied on each side of cold rolled strip (1).

8. Method in accordance with any one of the previous claims,
**characterised in that**
the functional layer (14) contains a corrosion-resistant material, in particular stainless steel, aluminium or titanium which, after application of the adhesive layer (10), is superposed flat on the cold rolled strip (1).

9. Cold rolled coil (20) comprising a cold rolled strip (1) obtained by rolling and recrystallisation annealing, then cooling, and a functional layer (14) applied to the cold rolled strip (1) and attached to it by an adhesive layer.

## Revendications

1. Procédé de fabrication d'un composant sandwich (26) à partir d'un feuillard laminé à froid (1), qui est obtenu grâce à un laminage à froid, un recuit de recristallisation et un refroidissement d'un feuillard d'acier, dans lequel une autre couche fonctionnelle (14) est appliquée sur le feuillard laminé à froid (1),
**caractérisé par** les étapes suivantes consistant à :
refroidir le feuillard laminé à froid (1) après le laminage et le recuit de recristallisation, appliquer une nappe de colle (10) sur le feuillard laminé à froid (1) refroidi, appliquer la couche fonctionnelle (14) sur la nappe de colle (10), enrouler le feuillard laminé à froid (1) avec la nappe de colle (10) appliquée et la couche fonctionnelle (14) pour en faire une bobine (20), ainsi que dérouler la bobine (20) et former de manière mécanique le feuillard laminé à froid (1) avec la nappe de colle (10) appliquée et la couche fonctionnelle (14) pour en faire un composant sandwich (26).

2. Procédé selon la revendication 1,
**caractérisé en ce que**,
la colle (8) de la nappe de colle (10) est une colle pouvant être activée thermiquement, ou contient une telle colle, et le feuillard laminé à froid (1) avec la couche fonctionnelle (14) appliquée dessus est chauffé au-delà de la température d'activation de la colle (8) en vue d'un durcissement de la colle (8) avant l'enroulage pour donner une bobine (20).

3. Procédé selon la revendication 1,
**caractérisé en ce que**,
la colle (8) de la nappe de colle (10) est une colle pouvant être activée thermiquement, ou contient une telle colle, et le durcissement de la colle (8) est activé grâce à l'énergie thermique libérée lors du procédé de formage, de telle manière que la couche fonctionnelle (14) peut être déplacée par rapport au feuillard laminé à froid (1) pendant le processus de formage.

4. Procédé selon la revendication 1 ou 2,
**caractérisé en ce que**,
la colle (8) de la nappe de colle (10) est une colle contenant du carbone, en particulier une colle organique, et le feuillard laminé à froid (1) avec la couche fonctionnelle (14) appliquée dessus est d'abord soumis à un procédé de génération, puis, suite à cela, à un procédé de recuit par recristallisation, avant l'enroulage pour donner une bobine (20), de telle manière que le carbone contenu dans la colle (8) forme, entre le feuillard laminé à froid (1) et la couche fonctionnelle (14), une couche de diffusion qui lie l'un à l'autre le feuillard laminé à froid (1) et la couche fonctionnelle (14).

5. Procédé selon l'une quelconque des revendications précédentes,
**caractérisé en ce que**,
le feuillard laminé à froid (1) avec la couche fonctionnelle (14) collée est déroulé de la bobine (20) et est soumis en particulier à un procédé de formage par compression, un procédé d'emboutissage ou un procédé d'étirage, pour conférer au feuillard laminé à froid (1) plat ainsi qu'à la couche fonctionnelle (14) la forme tridimensionnelle du composant sandwich (26).

6. Procédé selon l'une quelconque des revendications précédentes,
**caractérisé en ce que**,
la couche fonctionnelle (14) est simplement appliquée par sections sur la première face du feuillard laminé à froid (1).

7. Procédé selon l'une quelconque des revendications précédentes,
**caractérisé en ce que**,
le feuillard laminé à froid (1) est muni d'une nappe de colle sur ses deux côtés, et une couche fonctionnelle (14) est appliquée sur les deux côtés du feuillard laminé à froid (1).

8. Procédé selon l'une quelconque des revendications précédentes,
**caractérisé en ce que**,
la couche fonctionnelle (14) contient un matériau résistant à la corrosion, en particulier de l'acier inoxydable, de l'aluminium ou du titane, qui est superposé à plat au feuillard laminé à froid (1) après l'application de la nappe de colle (10).

9. Bobine de feuillard laminé à froid (20) comprenant un feuillard laminé à froid (1) obtenu par laminage et recuit de recristallisation ainsi que refroidissement, ainsi qu'une couche fonctionnelle (14) appliquée sur le feuillard laminé à froid (1) et reliée à celui-ci grâce à une nappe de colle.
